# EUROPEAN PATENT APPLICATION

(11) **EP 4 183 756 A1**
(43) Date of publication of application: **24.05.2023**
(21) Application number: 21888215.7
(22) Date of filing: 29.07.2021
(51) Int. Cl.: C04B 7/02, C04B 7/44

(54) **PORTLAND CEMENT CLINKER AND PREPARATION METHOD THEREFOR**

(30) Priority: 06.11.2020 CN 202011228838
(71) Applicant: Nanjing Tech University, Nanjing Jiangsu 210000 (CN); Jiangsu Ruiying Advanced Materials Technology Development Co., Ltd, Suqian, Jiangsu 210000 (CN)
(72) Inventor: ZHOU, Hao, Nanjing, Jiangsu 210000 (CN); LI, Xiaodong, Nanjing, Jiangsu 210000 (CN); SHI, Chaoqi, Nanjing, Jiangsu 210000 (CN); SHEN, Xiaodong, Nanjing, Jiangsu 210000 (CN); WANG, Qianqian, Nanjing, Jiangsu 210000 (CN); YU, Zhuqing, Nanjing, Jiangsu 210000 (CN)
(74) Representative: HGF
(86) International application number: PCT/CN2021/109189
(87) International publication number: WO 2022/095515

(57) **Abstract**

Disclosed are a portland cement clinker and a preparation method therefor. M1-type alite accounts for more than 99% of a mass of all alite crystal forms; and the clinker contains a trace amount of magnesium and a trace amount of sulfur, a mass percentage content of the magnesium is 0.5% to 5% in term of MgO, and a mass percentage content of the sulfur is 0.36% to 2.94% in term of SO₃. In the invention, from the perspective of ion regulation, a magnesium element and a sulfur element are simultaneously introduced in a preparation process of a portland cement raw meal, and M3-type alite in the clinker is completely converted into M1-type alite under the joint action of the magnesium element and the sulfur element, such that the portland cement clinker having a higher M1-type alite content is stably sintered, which not only reduces a clinker sintering temperature, and reduces fossil fuel consumption, but also reduces greenhouse gas emission, and achieves multiple effects of energy conservation, emission reduction, consumption reduction and quality improvement, and has extremely high application value.

## Description

### TECHNICAL FIELD

The present invention belongs to the technical field of civil engineering materials, and more particularly, relates to a portland cement clinker, and a preparation method for the portland cement clinker.

### BACKGROUND

The cement industry in China has developed rapidly. In 2019, the cement output in China was nearly 2.33 billion tons, with a year-on-year growth of 6.1%, accounting for more than 50% of the total output of cement in the world, and ranking first in the world. Although China is a big country for cement production, but not a strong country, and the overall quality of cement is not high, which affects the service life of the concrete engineering in China. Therefore, it is necessary to improve performances of the produced cement.

Portland cement, as a cement variety with the largest output, the largest use amount and the widest use range, is mainly composed of a portland cement clinker, gypsum and a mixed material. Improving performance of the portland cement mainly lies in improving performances of the portland cement clinker. Main minerals in the portland cement clinker are alite (3CaO·SiO₂, C₃S), belite (2CaO·SiO₂, C₂S), tricalcium aluminate (3CaO·Al₂O₃, C₃A) and tetracalcium aluminoferrite (4CaO·3Al₂O₃·Fe₂O₃, C₄AF). The alite is a main supplier of properties and strength of the portland cement clinker, and is also a main consumer of energy in portland cement production at the same time. In order to improve the quality of the portland cement clinker, research may be carried out in two ways, one is to improve the hydration activity of the alite, and the other is to increase the content of the alite in portland cement clinker. However, increasing the content of the content will lead to a problem that the clinker is difficult to burn, which needs to provide more energy than the current clinker production. At present, coal is mostly used as a fuel source for cement production in rotary kilns, and more energy consumption not only increases the fossil fuel consumption, but also increases the greenhouse gas emission, which does not meet the current requirements for sustainable development of resources and environment. In order to improve the hydration activity of the alite, the alite has seven crystal structures (T1, T2, T3, M1, M2, M3, and R) from room temperature to high temperature, which belong to three different crystal systems (triclinic system T, monoclinic system M and hexagonal system R), and the hydration activities of the seven crystal structures are different. Regulating the crystal structure of the alite in the portland cement clinker is a feasible method to improve the quality of the clinker. Alite crystal structures in the portland cement clinker are mainly M1-type and M3-type, and the alite crystal structures in the portland cement clinker produced by cement enterprises in China are mostly the M3-type. Experts and scholars at home and abroad have found that the hydration activity of the M1-type alite is higher than that of the M3-type alite, and the strength of the M1-type alite is also about 10% higher than that of the M3-type alite. Ion regulation on main mineral phases of the portland cement clinker is widely researched by experts and scholars at home and abroad as a technology which is simple to operate and easy to industrially apply since the 21^{st} century. However, a stable regulation process which can be applied to the production process of the portland cement clinker and regulates an M3-type alite crystal structure into an M1-type by doping some trace elements still leaves a blank in theoretical research and actual production.

### SUMMARY

Object of the present invention: the technical problem to be solved by the present invention is to stably regulate M3-type alite into M1-type alite in a portland cement clinker by means of ion regulation, so as to prepare a portland cement clinker with a higher M1-type alite content, improve a hydration activity of the alite, and achieve an effect of improving a strength of the clinker.

To implement the foregoing object, the technical solutions employed by the present invention are as follows.

A portland cement clinker, wherein M1-type alite accounts for more than 99% of a mass of all alite crystal forms; and the clinker contains a trace amount of magnesium and a trace amount of sulfur, wherein a mass percentage content of the magnesium is 0.5% to 5% in term of MgO, and a mass percentage content of the sulfur is 0.36% to 2.94% in term of SO₃.

Preferably, the M1-type alite in the portland cement clinker accounts for more than 99.9% of the mass of all alite crystal forms.

According to the present invention, in the clinker calcining process, a magnesium element and a sulfur element are simultaneously introduced, and M3-type alite in the clinker is completely converted into M1-type alite under the joint action of the magnesium element and the sulfur element.

Preferably, the mass percentage content of the magnesium in the clinker is 1.5% to 3.0% in term of MgO; and the mass percentage content of the sulfur is 1.09% to 2.18% in term of SO₃.

Specifically, the portland cement clinker of the present invention comprises the following components in terms of mass percentage:
M1-type alite: 55.48% to 63.36%;
belite: 17.1% to 20.21%;
tricalcium aluminate: 6.36% to 8.63%;
tetracalcium aluminoferrite: 8.13% to 12.86%;
f-CaO: less than 0.35%; and
the balance being other phases, such as: phases like free magnesium oxide, calcium sulfate, calcium potassium sulfate and amorphous phase, which are well known to those of ordinary skills in the art.

Further, the present invention also provides a preparation method for the portland cement clinker, comprising the following steps of:
(1) determining proportions of raw meal components according to a composition of the portland cement clinker, wherein the raw meal components comprise at least one magnesium-containing raw material and at least one sulfur-containing raw material, ensuring that, in the clinker, a content of the magnesium element is calculated in term of MgO, with a mass percentage of 0.5% to 5%, and a content of the sulfur element is calculated in term of SO₃, with a mass percentage of 0.36% to 2.94%; and
(2) calcining the prepared raw meal to obtain the portland cement clinker.

Preferably, in the step (1), the content of the magnesium element is calculated in term of MgO, the content of the sulfur element is calculated in term of SO₃, and a mass ratio of MgO to SO₃ ranges from 1.2 to 1.7.

Specifically, the magnesium-containing raw material comprises, but is not limited to any one or a combination of two or more of a magnesium-containing limestone, a magnesium-containing dolomite and MgO.

The sulfur-containing raw material comprises, but is not limited to any one or a combination of two or more of natural gypsum, desulfurized gypsum and phospho gypsum.

Specifically, in the step (2), in a calcining stage, the temperature is raised to 1,400°C to 1,500°C at 5°C/min to 35°C/min, maintained for 30 minutes to 60 minutes, and then cooled to room temperature at a cooling rate of 50°C/min to 90°C/min.

Specifically, in the step (2), in the calcining stage, the temperature is raised to 1,500°C at 10°C/min, maintained for 60 minutes, and then cooled to room temperature at the cooling rate of 60°C/min.

According to the present invention, Mg²⁺ enters the alite to mainly replace a position of Ca²⁺, and in the portland cement clinker, Mg²⁺ mainly stabilizes the M3-type alite; and S⁶⁺ mainly replaces a position of Si⁴⁺ in the alite, and one Ca²⁺ is squeezed out of the structure at the same time, thus reducing a structural symmetry, and through the joint action of Mg²⁺ and S⁶⁺, the M3-type alite with a higher symmetry can be converted into the M1-type alite with a lower symmetry.

The sulfur-containing raw material comprises, but is not limited to, natural gypsum, desulfurized gypsum, phospho gypsum and the like. Different from SO₃ in coal ash generated by burning a fossil fuel (which is mainly coal) entering the clinker, extra added SO₃ will participate in a solid-phase reaction of the portland cement clinker and enter the alite crystal structure, while SO₃ in the coal ash mainly indwells in a cement rotary kiln as SO₂ atmosphere, or indwells in kiln coating and free state in a form of CaSO₄, so that SO₃ in the coal ash will not participate in the solid-phase reaction of the portland cement clinker.

The magnesium-containing raw material comprises, but is not limited to a magnesium-containing limestone, a magnesium-containing dolomite, MgO and the like. The limestone is an important raw material for preparing the portland cement clinker, and is accompanied by a certain amount of MgO, which is also a main source of MgO in the portland cement clinker, so that MgO in the limestone will participate in the solid-phase reaction of clinker calcination. Therefore, it is unnecessary to add additional MgO or a small amount of MgO by considering a content of MgO in calculation of ingredients.

### Beneficial effects:

1. According to the present invention, aiming at the alite which is a main strength provider of the cement clinker, the alite is stabilized to be the M1-type with a higher activity at room temperature by introducing regulation components into a complex multicomponent system clinker. In a clinker system with typical composition, a plurality of ions such as Na⁺, K⁺, Mg²⁺, Al³⁺ and Fe³⁺ and the like are inevitably dissolved in the alite at the same time, and the crystal structure of the alite is mainly the M3-type. According to the present invention, the common M3-type alite in the portland cement clinker can be regulated into the M1-type alite by regulating the content of Mg in the clinker and additionally introducing a certain content of sulfur into the clinker to prepare the portland cement clinker with a higher M1-type alite content, and the M1-type alite accounts for more than 99.9% of the mass of all alite crystal forms.
2. Raw materials used in the portland cement clinker with a higher M1-type alite content are easily available, and the method is simple and easy to operate, and has high universality. Desulfurized gypsum, phospho gypsum and the like may be used as sources of sulfur in actual production, so that a comprehensive utilization value of an industrial byproduct is increased. The magnesium can be derived from the limestone, and no additional ingredient components need to be added, so that convenient operation is realized, and the production costs will not be increased. Through the method of the present invention, the alite crystal structure in the portland cement clinker can be completely converted from M3-type or M1/M3 hybrid type into M1-type.

### BRIEF DESCRIPTION OF THE DRAWINGS

The advantages of the above and/or other aspects of the present invention will become more apparent by further explaining the present invention with reference to the following drawings and detailed description.
FIG. 1a shows X-ray diffraction spectra of Embodiment 1 and Comparative Examples A1, B and C.
FIG. 1b shows X-ray characteristic diffraction area spectra of alite in Embodiment 1 and Comparative Examples A1, B and C.
FIG. 2a shows results of mineral phase content obtained by Rietveld full-spectrum fitting calculation of Comparative Example A1.
FIG. 2b shows results of mineral phase content obtained by Rietveld full-spectrum fitting calculation of Comparative Example B.
FIG. 2c shows results of mineral phase content obtained by Rietveld full-spectrum fitting calculation of Comparative Example C.
FIG. 2d shows results of mineral phase content obtained by Rietveld full-spectrum fitting calculation of Embodiment 1.
FIG. 3a shows X-ray diffraction spectrums of Embodiment 2 and Comparative Examples A2, D and E.
FIG. 3b shows X-ray characteristic diffraction area spectra of alite in Embodiment 2 and Comparative Examples A2, D and E.
FIG. 4a shows results of mineral phase content obtained by Rietveld full-spectrum fitting calculation of Comparative Example A2.
FIG. 4b shows results of mineral phase content obtained by Rietveld full-spectrum fitting calculation of Comparative Example D.
FIG. 4c shows results of mineral phase content obtained by Rietveld full-spectrum fitting calculation of Comparative Example E.
FIG. 4d shows results of mineral phase content obtained by Rietveld full-spectrum fitting calculation of Embodiment 2.
FIG. 5a shows X-ray diffraction spectra of Embodiment 3 and Comparative Examples A3, F and G.
FIG. 5b shows X-ray characteristic diffraction area spectra of Embodiment 3 and Comparative Examples A3, F and G.
FIG. 6a shows results of mineral phase content obtained by Rietveld full-spectrum fitting calculation of Comparative Example A3.
FIG. 6b shows results of mineral phase content obtained by Rietveld full-spectrum fitting calculation of Comparative Example F.
FIG. 6c shows results of mineral phase content obtained by Rietveld full-spectrum fitting calculation of Comparative Example G.
FIG. 6d shows results of mineral phase content obtained by Rietveld full-spectrum fitting calculation of Embodiment 3.
FIG. 7a shows X-ray diffraction spectra of Embodiment 4 and Comparative Examples A4, H and I.
FIG. 7b shows X-ray characteristic diffraction area spectra of Embodiment 4 and Comparative Examples A4, H and I.
FIG. 8a shows results of mineral phase content obtained by Rietveld full-spectrum fitting calculation of Comparative Example A4.
FIG. 8b shows results of mineral phase content obtained by Rietveld full-spectrum fitting calculation of Comparative Example H.
FIG. 8c shows results of mineral phase content obtained by Rietveld full-spectrum fitting calculation of Comparative Example I.
FIG. 8d shows results of mineral phase content obtained by Rietveld full-spectrum fitting calculation of Embodiment 4.
FIG. 9a shows X-ray diffraction spectra of Embodiment 5 and Comparative Example A5.
FIG. 9b shows X-ray characteristic diffraction area spectra of alite in Embodiment 5 and Comparative Example A5.

### DETAILED DESCRIPTION

The present invention can be better understood from the following embodiments.

In the following embodiments, testing methods adopted comprise that:
XRD data are sampled by a Thermal fisher ARL 9900 X-ray diffraction analyzer (Co target) and a Rigaku MiniFlex 600 X-ray diffraction analyzer (Cu target).

Contents of minerals in a clinker are obtained by XRD full-spectrum fitting, and calculation is realized by a GSAS EXGUI software package based on a Rietveld method.

Clinker strength is tested according to national standard GB/Tl7671-1999.

Specific surface area is determined according to national standard GB/T8074-2008.

### Embodiment 1

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of CaAF, and ratio values of the clinker were designed to be that KH=0.91, SM=2.60 and IM=1.60. In Embodiment 1, a content of MgO in the clinker was 0.5%, SO₃ was added in a form of desulfurized gypsum, and a content of SO₃ in the clinker was 0.36%. In Comparative Example A1, the clinker did not contain magnesium and sulfur, in Comparative Example B, the clinker contained sulfur but did not contain magnesium, and in Comparative Example C, the clinker contained magnesium but did not contain sulfur. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 1.

**Table 1 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A1** | 22.86 | 5.41 | 3.38 | 68.35 | 0.00 | 0.00 |
| **Comparative Example B** | 22.74 | 5.38 | 3.36 | 68.01 | 0.00 | 0.36 |
| **Comparative Example C** | 22.72 | 5.38 | 3.36 | 68.18 | 0.50 | 0.00 |
| **Embodiment 1** | 22.60 | 5.35 | 3.34 | 67.85 | 0.50 | 0.36 |

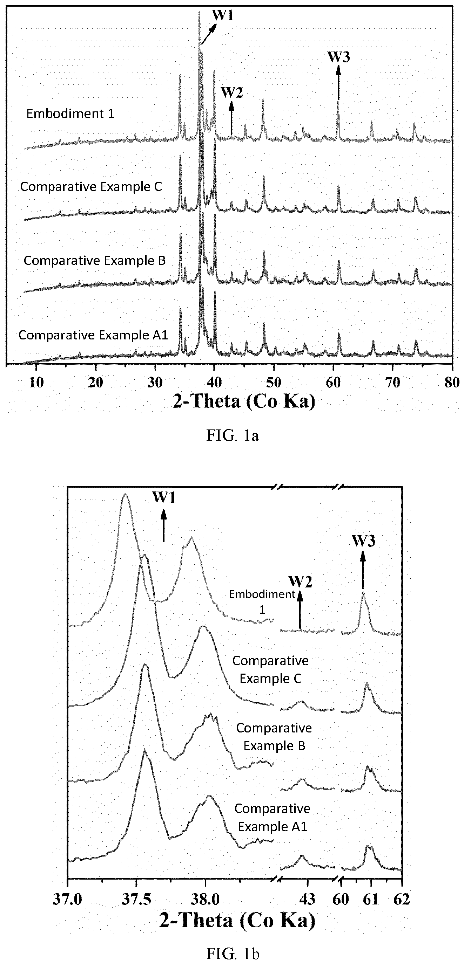

FIG. 1a showed X-ray diffraction spectra of Embodiment 1 and Comparative Examples. It could be found from the figure by comparison that the four X-ray diffraction spectra were basically similar, indicating that compositions of four samples were similar. According to documents, 20 angle degrees of three regions distinguishing M1 and M3 crystal structures in characteristic diffraction peaks of alite were 37.0° to 38.5°, 42.5° to 43.5° and 60° to 62° (Co target scanning results), or 32.0° to 33.0°, 36.5° to 37.0° and 51.5° to 52.5° (Cu target scanning results) respectively (the same below). FIG. 1b showed spectra of the three regions in the characteristic diffraction peaks of the alite in Embodiment 1 and Comparative Examples under Co target scanning. Combined with W1 and W3 windows, Comparative Example A1 and Comparative Example B had typical M3-type alite characteristics, and Comparative Example C had no obvious peak splitting in the W3 window, indicating that Comparative Example C had a M1/M3 hybrid type alite crystal form. However, the W3 window of Embodiment 1 obviously formed one single peak, indicating that the alite was completely M1-type. A height of the diffraction peak in the W2 window determined a quantity of M3-type alite. When the W2 window did not have a diffraction peak, it was indicated that the sample was M1-type alite. As could be seen from the W2 window in FIG. 1b, the diffraction peaks of Comparative Example A1 and Comparative Example B were high, and the diffraction peak of Comparative Example C was lower than those of the former two comparative examples, indicating that the alite crystal structure already contained the M1-type alite, while the W2 window of Embodiment 1 did not have a diffraction peak, and the alite crystal structure thereof was M1-type.

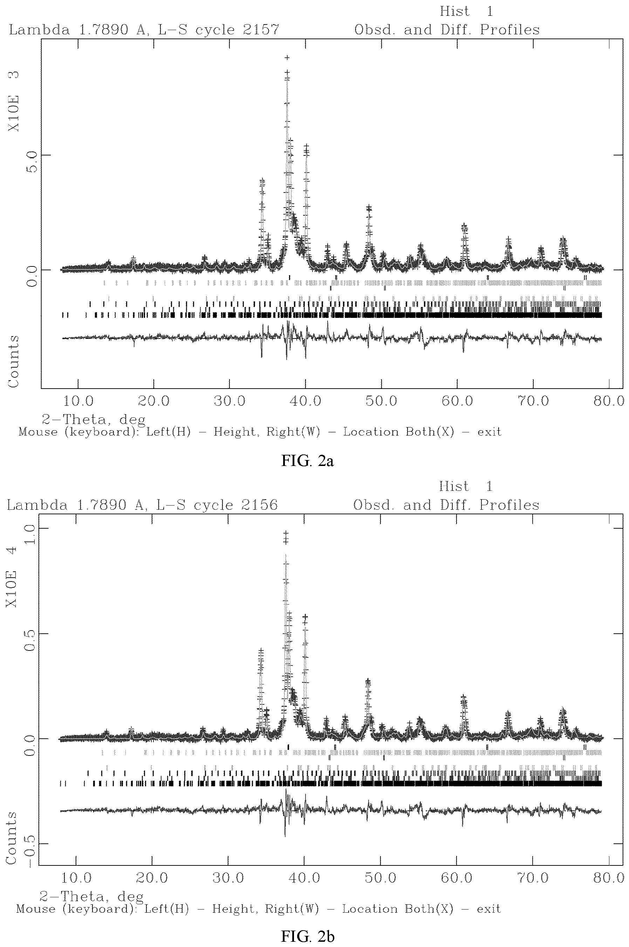

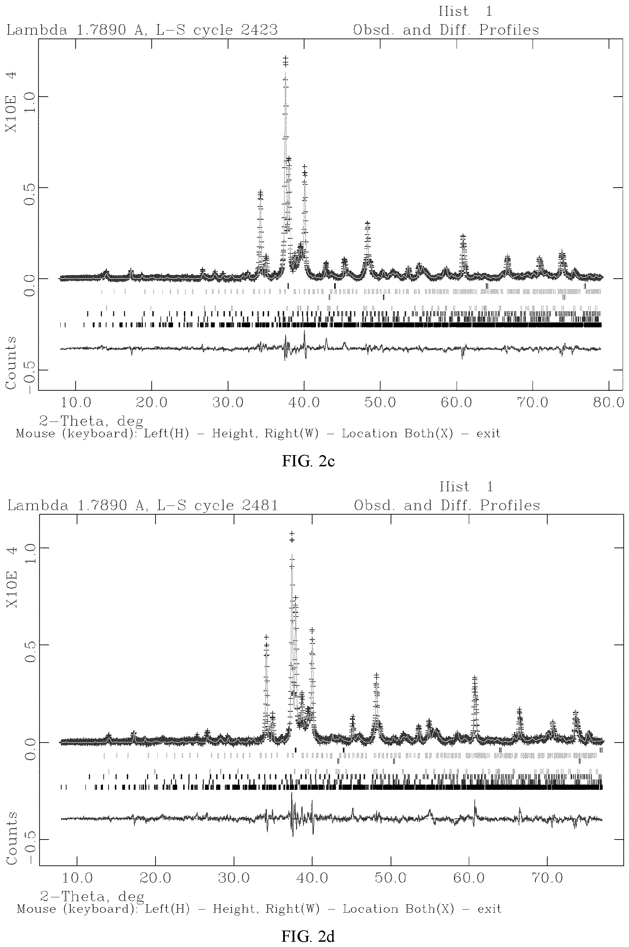

FIG. 2a to FIG. 2d showed fitting graphs obtained by Rietveld full-spectrum fitting calculation of Comparative Examples and Embodiment 1. Fitting results were shown in Table 2. The alite crystal structures in Comparative Example A1 and Comparative Example B were all M3-type, and the alite crystal structure in Comparative Example C was M1/M3 hybrid type, which accounted for 19.12% and 42.86% respectively. This was because only magnesium was doped in Comparative Example C, and a content of magnesium was only 0.5%. This part of MgO would be partially dissolved into alite during calcination, which caused partial crystal lattice distortion of alite. Therefore, a phenomenon that the M1-type alite and the M3-type alite were mixed occurred in Comparative Example C. Meanwhile, no magnesium and sulfur were doped in Comparative Example A1, and the alite structure thereof was also M3-type, which could also support a view that a part of magnesium was dissolved into alite to partially convert the structure in Comparative Example C. This was consistent with a conclusion mentioned in the paper (Segata, M. et al, The effects of MgO, Na2O and SO3 on industrial clinkering process: phase composition, polymorphism, microstructure and hydration, using a multidisciplinary approach, Materials Characterization, 155(2019) 109809-109822.) published by Segata et al. that the alite crystal structure in the clinker was M1/M3 hybrid type when 0.77% MgO was doped. The alite crystal structures in Embodiment 1 were all M1-type, and a content of C₃S was the highest among all samples.

**Table 2 Mineral phase composition of clinker**

| **Embodiment** | **C₃S** | | **C₂S** | **C₃A** | **C₄AF** | **f-CaO** | **f-MgO** | **CaSO₄** |
|---|---|---|---|---|---|---|---|---|
| | **M3-C3S** | **M3-C₃S** | | | | | | |
| **Comparative Example A1** | 60.42 | 0.04 | 19.76 | 8.60 | 10.28 | 0.90 | 0.00 | 0.00 |
| **Comparative Example B** | 57.96 | 0.01 | 20.66 | 8.80 | 11.47 | 1.10 | 0.00 | 0.00 |
| **Comparative Example C** | 42.86 | 19.12 | 17.89 | 7.40 | 12.23 | 0.50 | 0.00 | 0.00 |
| **Embodiment 1** | 0.05 | 62.37 | 17.70 | 8.00 | 11.58 | 0.30 | 0.00 | 0.00 |

The clinker samples were tested for compressive strength according to GB/T17671-1999. Water was added to cement according to a water-cement ratio of 0.5, to prepare 40 mm ×40 mm ×160 mm mortar test blocks, the mortar test block was cured according to the standard, and the compressive strength of the mortar test block was respectively measured for 3d, 7d and 28d, which were shown in Table 3.

**Table 3 Free calcium content, specific surface area and strength properties of clinker samples**

| **Embodiment** | **Free calcium oxide/wt%** | **Specific surface area/m**² **/kg** | **Compressive strength/MPa** | | |
|---|---|---|---|---|---|
| | | | **3d** | **7d** | **28d** |
| **Comparative Example A1** | 0.90 | 351.6 | 21.6 | 39.4 | 56.1 |
| **Comparative Example B** | 1.10 | 352.1 | 20.8 | 38.4 | 55.3 |
| **Comparative Example C** | 0.50 | 350.4 | 22.8 | 41.3 | 57.7 |
| **Embodiment 1** | 0.30 | 351.1 | 25.8 | 45.6 | 65.2 |

With reference to the results in Table 2 and Table 3, the contents of alite in the clinker of Embodiment 1 and Comparative Example A1 were similar, and the compressive strength at each age of Embodiment 1 containing a higher content of M1-type alite was obviously higher than that of Comparative Example A1 containing M3-type alite. The strength increased by 19.44% in 3d, 15.74% in 7d and 16.22% in 28d.

### Embodiment 2

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 2, a content of MgO in the clinker was 1.5%, SO₃ was added in a form of desulfurized gypsum, and a content of SO₃ in the clinker was 1.09%. In Comparative Example A2, the clinker did not contain magnesium and sulfur, in Comparative Example D, the clinker contained sulfur but did not contain magnesium, and in Comparative Example E, the clinker contained magnesium but did not contain sulfur. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 4.

**Table 4 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A2** | 22.86 | 5.41 | 3.38 | 68.35 | 0.00 | 0.00 |
| **Comparative Example D** | 22.52 | 5.33 | 3.33 | 67.33 | 1.50 | 0.00 |
| **Comparative Example E** | 22.43 | 5.31 | 3.32 | 67.84 | 0.00 | 1.09 |
| **Embodiment 2** | 22.09 | 5.23 | 3.27 | 66.82 | 1.50 | 1.09 |

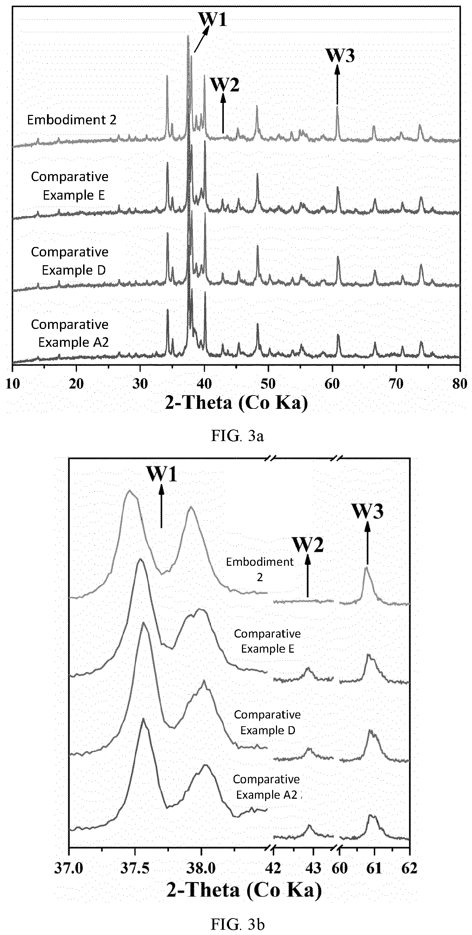

FIG. 3a showed X-ray diffraction spectra of Embodiment 2 and Comparative Examples. It could be found from the figure by comparison that the four X-ray diffraction spectra were basically similar, indicating that compositions of four samples were similar. FIG. 3b showed spectra of three regions in characteristic diffraction peaks of alite in Embodiment 2 and Comparative Examples under Co target scanning (37.0° to 38.5°, 42.5° to 43.5° and 60° to 62°). Combined with W1 and W3 windows, Comparative Example A2, Comparative Example D and Comparative Example E had typical M3-type alite characteristics, and peak splitting occurred in both the W1 window and the W3 window. However, the W3 window of Embodiment 2 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 3b, the diffraction peaks of Comparative Example A2, Comparative Example D and Comparative Example E were high, indicating that the alite crystal structure was M3-type, while the W2 window of Embodiment 1 did not have a diffraction peak, and the alite crystal structure thereof was M1-type.

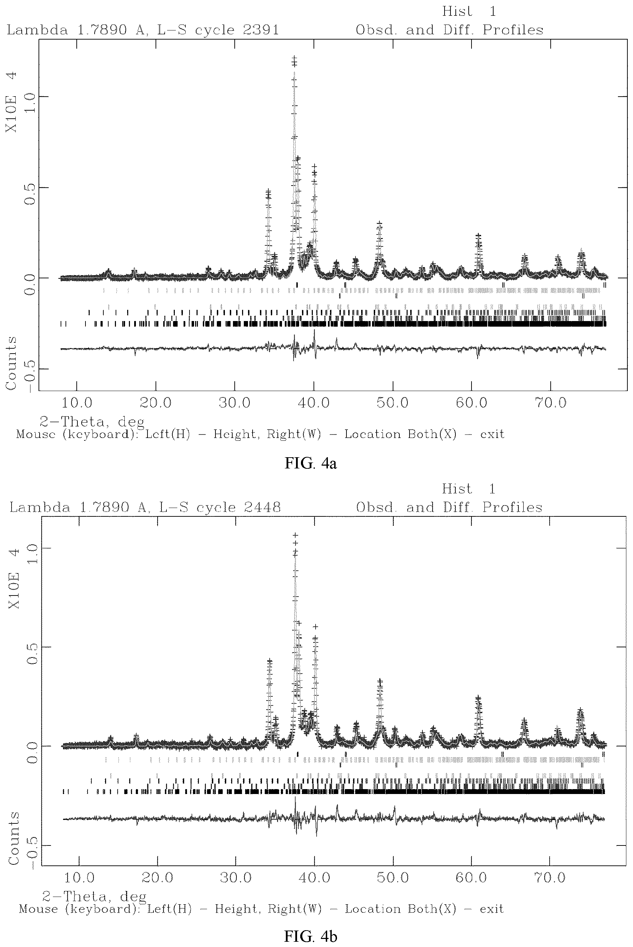

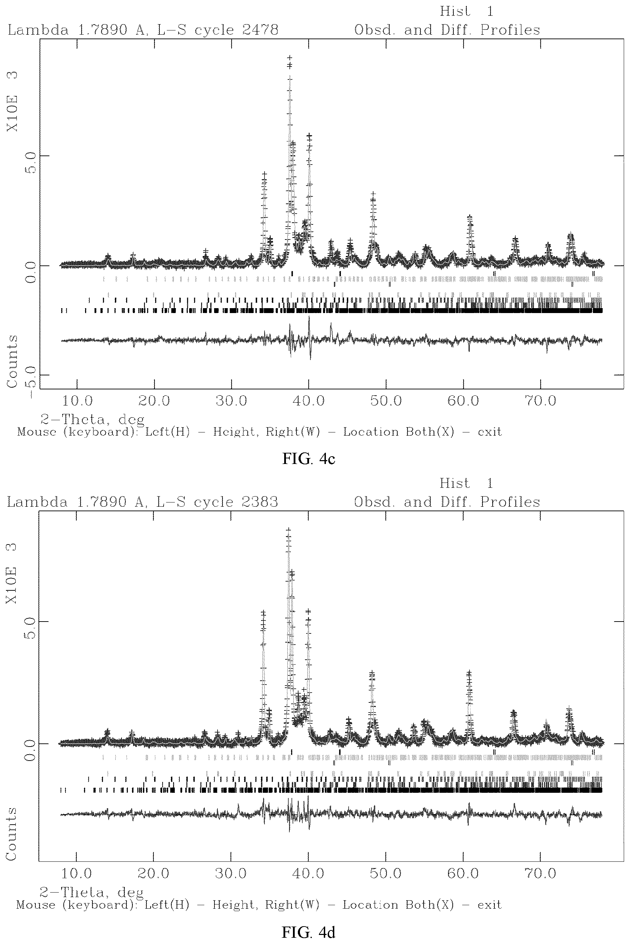

FIG. 4a to FIG. 4d showed fitting graphs obtained by Rietveld full-spectrum fitting calculation of Comparative Examples and Embodiment 2. Fitting results were shown in Table 5. The alite crystal structures in Comparative Example A2, Comparative Example D and Comparative Example E were all M3-type. For Comparative Example D, because an amount of MgO doped already reached 1.5%, a content of MgO entering the alite structure already reached a level of stabilizing the M3-type alite, which was different from a condition that the amount of MgO was not enough to completely stabilize the M3-type alite in Comparative Example C. Therefore, the alite crystal structure in Comparative Example D was M3-type. This was consistent with research results of Xuehong Ren, et al, that when the content of MgO reached 1.1%, the alite crystal structure was M3-type (X.H. Ren, WS. Zhang, J.Y Ye, FTIR study on the polymorphic structure of tricalcium silicate, Cement and Concrete Research, 99 (2017) 129-136.). However, for Comparative Example E in which only sulfur was doped, a content of sulfur in a clinker already affected the formation of C₃S, which was not conducive to the calcination of the clinker. The alite crystal structures in Embodiment 2 were all M1-type, and a content of C₃S was the highest among the four samples. It could be seen from this comparison that MgO alone and SO₃ alone had no beneficial effect on the clinker, but after adding MgO and SO₃ in a proper proportion, the calcined clinker was better, which was the function of crystal structure regulation, so that the M3-type alite was converted into the M1-type alite.

**Table 5 Mineral phase composition of clinker**

| **Embodiment** | **C₃S** | | **C₂S** | **C₃A** | **C₄AF** | **f-CaO** | **f-MgO** | **CaSO₄** |
|---|---|---|---|---|---|---|---|---|
| | **M3-C₃S** | **M1-C₃S** | | | | | | |
| **Comparative Example A2** | 60.25 | 0.04 | 19.91 | 8.48 | 10.22 | 1.10 | 0.00 | 0.00 |
| **Comparative Example D** | 61.87 | 0.01 | 19.06 | 7.24 | 12.47 | 0.35 | 0.00 | 0.00 |
| **Comparative Example E** | 52.89 | 0.03 | 24.43 | 9.40 | 11.65 | 1.60 | 0.00 | 0.00 |
| **Embodiment 2** | 0.00 | 63.27 | 17.40 | 7.63 | 11.40 | 0.30 | 0.00 | 0.00 |

The clinker samples were tested for compressive strength according to GB/T17671-1999. Water was added to cement according to a water-cement ratio of 0.5, to prepare 40 mm ×40 mm ×160 mm mortar test blocks, the mortar test block was cured according to the standard, and the compressive strength of the mortar test block was respectively measured for 3d, 7d and 28d, which were shown in Table 6.

**Table 6 Free calcium content, specific surface area and strength properties of clinker samples**

| **Embodiment** | **Free calcium oxide/wt%** | **Specific surface area/m²/kg** | **Compressive strength/MPa** | | |
|---|---|---|---|---|---|
| | | | **3d** | **7d** | **28d** |
| **Comparative Example A2** | 1.1 | 350.4 | 21.2 | 39.0 | 55.9 |
| **Comparative Example D** | 0.35 | 351.3 | 22.0 | 40.2 | 57.3 |
| **Comparative Example E** | 1.60 | 348.8 | 19.8 | 36.8 | 53.1 |
| **Embodiment 2** | 0.30 | 350.8 | 26.1 | 46.6 | 64.7 |

With reference to the results in Table 5 and Table 6, the alite crystal structures in the clinker samples of Comparative Examples A2, D and E were all M3-type, and the strength of each age was close. The reason why the strength of Comparative Example E was slightly lower at each age was mainly that it was a single sulfur-doped sample, and the existence of sulfur limited the formation of the alite, resulting in a low content of the alite and affecting the strength of the clinker. The alite crystal structure in the clinker of Embodiment 2 was M1-type, and the compressive strength at each age thereof was obviously higher than that of the samples of Comparative Examples A2, D and E containing M3-type alite. Compared with Comparative Example D, which had the highest strength at each age, the strength of the clinker in Embodiment 2 increased by 18.64% in 3d, 15.92% in 7d and 12.91% in 28d.

### Embodiment 3

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of C₄AF, and ratio values of the clinker were designed to be that KH=0.91, SM=2.60 and IM=1.60. In Embodiment 3, a content of MgO in the clinker was 3.0%, SO₃ was added in a form of desulfurized gypsum, and a content of SO₃ in the clinker was 2.18%. In Comparative Example A3, the clinker did not contain magnesium and sulfur, in Comparative Example F, the clinker contained magnesium but did not contain sulfur, and in Comparative Example G, the clinker contained sulfur but did not contain magnesium. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 7.

**Table 7 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A3** | 22.86 | 5.41 | 3.38 | 68.35 | 0.00 | 0.00 |
| **Comparative Example F** | 22.17 | 5.25 | 3.28 | 66.30 | 3.00 | 0.00 |
| **Comparative Example G** | 22.01 | 5.21 | 3.26 | 67.34 | 0.00 | 2.18 |
| **Embodiment 3** | 21.32 | 5.05 | 3.16 | 65.29 | 3.00 | 2.18 |

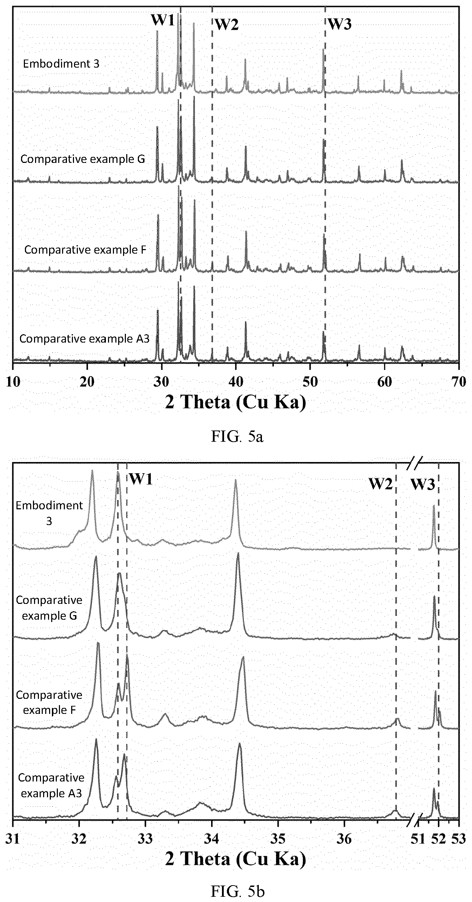

FIG. 5a showed X-ray diffraction spectra of Embodiment 3 and Comparative Examples. It could be found from the figure by comparison that the four X-ray diffraction spectra were basically similar, indicating that compositions of four samples were similar. FIG. 5b showed spectra of three regions in characteristic diffraction peaks of alite in Embodiment 3 and Comparative Examples under Cu target scanning (with Kα2 ray filtered) (32.0° to 33.0°, 36.5° to 37.0° and 51.5° to 52.5°). Combined with W1 and W3 windows, Comparative Example A3 and Comparative Example F had typical M3-type alite characteristics, and although Comparative Example G had obviously reduced peak splitting degree in the W1 window and the W3 window, there was still peak splitting. This condition was mainly caused by a fact that, when only sulfur was doped, the existence of sulfur in an amount exceeding a certain amount would affect a stability of the alite crystal structure. However, the W3 window of Embodiment 3 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 5b, the diffraction peaks of Comparative Example A3, Comparative Example F and Comparative Example G were high, indicating that the alite crystal structure was M3-type, while the W2 window of Embodiment 3 did not have a diffraction peak, and the alite crystal structure thereof was M1-type.

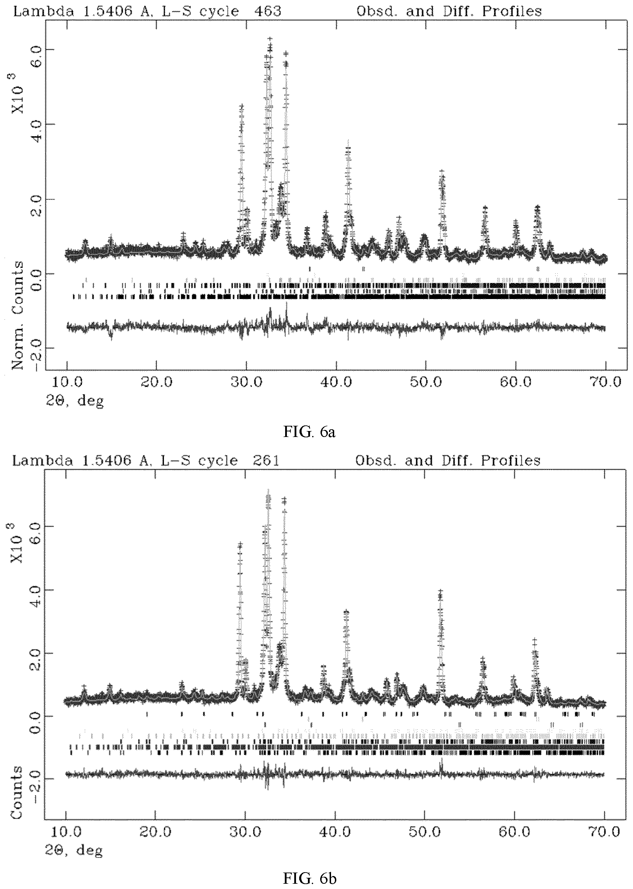

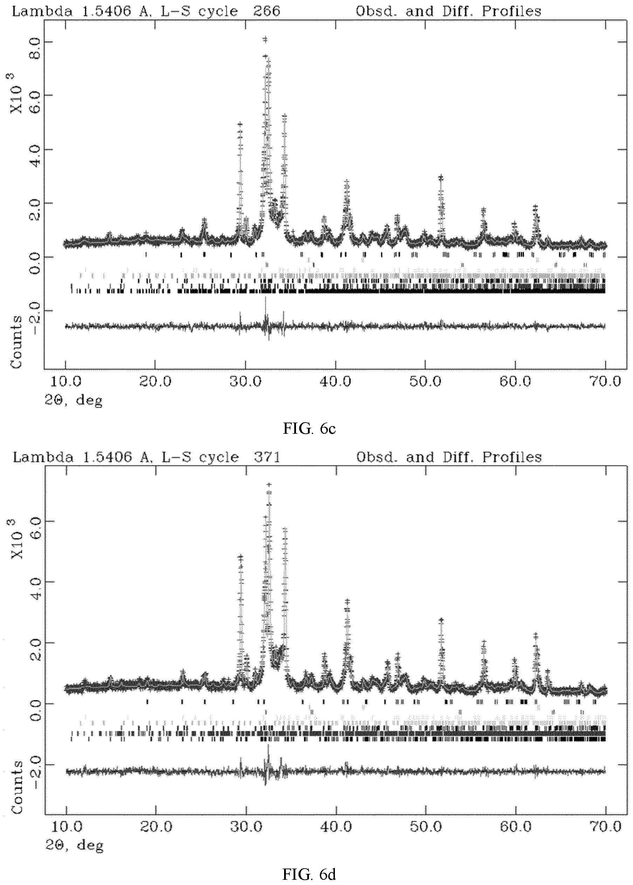

FIG. 6a to FIG. 6d showed fitting graphs obtained by Rietveld full-spectrum fitting calculation of Comparative Examples and Embodiment 3. Fitting results were shown in Table 8. The alite crystal structures in Comparative Example A3, Comparative Example F and Comparative Example G were all M3-type. Compared with Comparative Example E, a content of C₃S in Comparative Example G in which only sulfur was doped was further reduced. The alite crystal structures in Embodiment 3 were all M1-type, and a content of C₃S was the highest among the four samples.

**Table 8 Mineral phase composition of clinker**

| **Embodiment** | **C₃S** | | **C₂S** | **C₃A** | **CaAF** | **f-CaO** | **f-MgO** | **CaSO₄** |
|---|---|---|---|---|---|---|---|---|
| | **M3-C₃S** | **M3-C₃S** | | | | | | |
| **Comparative Example A3** | 60.36 | 0.02 | 19.85 | 8.55 | 10.30 | 0.92 | 0.00 | 0.00 |
| **Comparative Example F** | 62.10 | 0.02 | 17.56 | 7.04 | 11.57 | 0.15 | 1.56 | 0.00 |
| **Comparative Example G** | 46.14 | 0.01 | 28.78 | 10.29 | 10.88 | 2.46 | 0.00 | 1.44 |
| **Embodiment 3** | 0.02 | 63.36 | 17.22 | 6.68 | 10.28 | 0.26 | 1.52 | 0.66 |

The clinker samples were tested for compressive strength according to GB/T17671-1999. Water was added to cement according to a water-cement ratio of 0.5, to prepare 40 mm ×40 mm ×160 mm mortar test blocks, the mortar test block was cured according to the standard, and the compressive strength of the mortar test block was respectively measured for 3d, 7d and 28d, which were shown in Table 9.

**Table 9 Free calcium content, specific surface area and strength properties of clinker samples**

| **Embodiment** | **Free calcium oxide/wt%** | **Specific surface area/m**²**/kg** | **Compressive strength/MPa** | | |
|---|---|---|---|---|---|
| | | | **3d** | **7d** | **28d** |
| **Comparative Example A3** | 0.92 | 350.2 | 21.4 | 39.1 | 56.2 |
| **Comparative Example F** | 0.15 | 350.8 | 22.6 | 40.6 | 58.1 |
| **Comparative Example G** | 2.46 | 347.8 | 18.6 | 35.3 | 51.9 |
| **Embodiment 3** | 0.26 | 350.5 | 26.4 | 46.9 | 65.1 |

With reference to the results in Table 8 and Table 9, the alite crystal structures in the clinker samples of Comparative Examples A3, F and G were all M3-type, and the strength of each age was close. The reason why the strength of Comparative Example Gwas slightly lower at each age was mainly that it was a single sulfur-doped sample, and the existence of sulfur limited the formation of the alite, resulting in a low content of the alite and affecting the strength of the clinker. The alite crystal structure in the clinker of Embodiment 3 was M1-type, and the compressive strength at each age thereof was obviously higher than that of the samples of Comparative Examples A3, F and G containing M3-type alite. Compared with Comparative Example F, which had the highest strength at each age, the strength of the clinker in Embodiment 3 increased by 16.81% in 3d, 15.52% in 7d and 12.05% in 28d.

### Embodiment 4

Analytically pure CaCO₃, SiO₂, Al₂O₃, Fe₂O₃ and MgO, and desulfurized gypsum were used to prepare a raw meal, a mineral composition of a clinker was designed to sequentially comprise 63.42% of C₃S, 17.70% of C₂S, 8.6% of C₃A and 10.28% of CaAF, and ratio values of the clinker were designed to be that KH=0.91, SM=2.60 and IM=1.60. In Embodiment 4, a content of MgO in the clinker was 5.0%, SO₃ was added in a form of desulfurized gypsum, and a content of SO₃ in the clinker was 2.94%. In Comparative Example A4, the clinker did not contain magnesium and sulfur, in Comparative Example H, the clinker contained magnesium but did not contain sulfur, and in Comparative Example I, the clinker contained sulfur but did not contain magnesium. The raw meal was blended according to a raw material proportion and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 10.

**Table 10 Chemical composition of clinker**

| **Embodiment** | **Mass percentage wt/%** | | | | | |
|---|---|---|---|---|---|---|
| | **SiO₂** | **Al₂O₃** | **Fe₂O₃** | **CaO** | **MgO** | **SO₃** |
| **Comparative Example A4** | 22.86 | 5.41 | 3.38 | 68.35 | 0.00 | 0.00 |
| **Comparative Example H** | 21.71 | 5.14 | 3.22 | 64.94 | 5.00 | 0.00 |
| **Comparative Example I** | 21.72 | 5.14 | 3.21 | 66.99 | 0.00 | 2.94 |
| **Embodiment 4** | 20.58 | 4.87 | 3.05 | 63.57 | 5.00 | 2.94 |

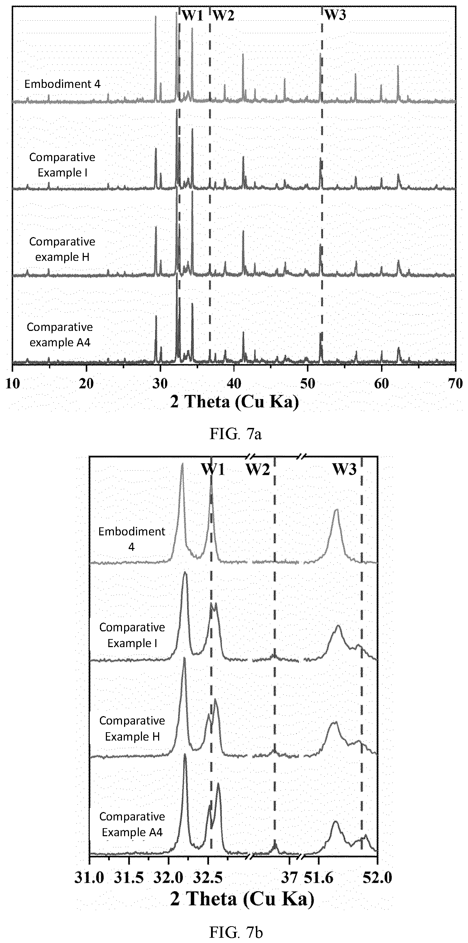

FIG. 7a showed X-ray diffraction spectra of Embodiment 4 and Comparative Examples. It could be found from the figure by comparison that the four X-ray diffraction spectra were basically similar, indicating that compositions of four samples were similar. FIG. 7b showed spectra of three regions in characteristic diffraction peaks of alite in Embodiment 4 and Comparative Examples under CU target scanning (with Kα2 ray filtered) (32.0° to 33.0°, 36.5° to 37.0° and 51.5° to 52.5°). Combined with W1 to W3 windows, Comparative Example A4, Comparative Example H and Comparative Example I had obvious M3-type alite characteristics. However, the W3 window of Embodiment 4 obviously formed one single peak, indicating that the alite was completely M1-type. A height of the diffraction peak in the W2 window determined a quantity of the M3-type alite. When the W2 window did not have a diffraction peak, it was indicated that the sample was the M1-type alite. As could be seen from the W2 window in FIG. 7b, the diffraction peaks of Comparative Example A4, Comparative Example H and Comparative Example I were high, indicating that the alite crystal structure was M3-type, while the W2 window of Embodiment 4 did not have a diffraction peak, and the alite crystal structure thereof was M1-type.

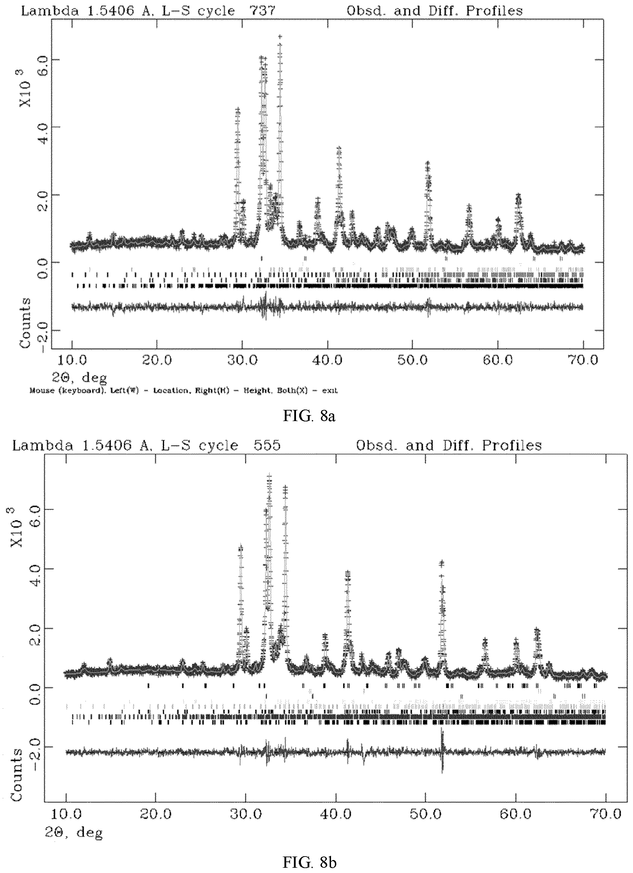

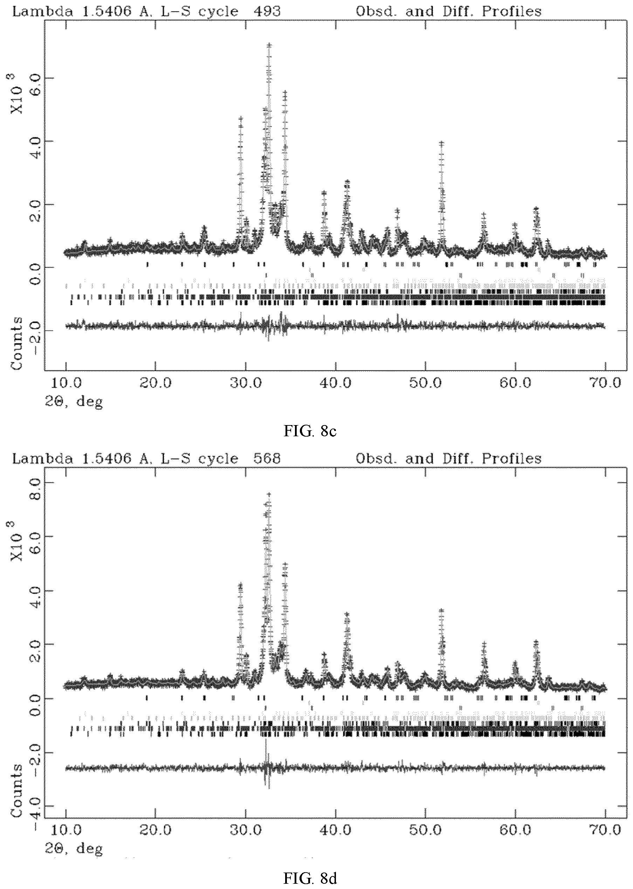

FIG. 8a to FIG. 8d showed fitting graphs obtained by Rietveld full-spectrum fitting calculation of comparative examples and Embodiment 4. Fitting results were shown in Table 11. The alite crystal structures in Comparative Example A4, Comparative Example H and Comparative Example I were all M3-type. Compared with Comparative Example G, a content of C₃S in Comparative Example I only doped with sulfur was further reduced. The alite crystal structures in Embodiment 4 were all M1-type.

The clinker samples were tested for compressive strength according to GB/T17671-1999. Water was added to cement according to a water-cement ratio of 0.5, to prepare 40 mm ×40 mm ×160 mm mortar test blocks, the mortar test block was cured according to the standard, and the compressive strength of the mortar test block was respectively measured for 3d, 7d and 28d, which were shown in Table 12.

**Table 11 Mineral phase composition of clinker**

| **Embodiment** | **C₃S** | | **C₂S** | **C₃A** | **CaAF** | **f-CaO** | **f-MgO** | **CaSO₄** |
|---|---|---|---|---|---|---|---|---|
| | **M3-C₃S** | **M3-C₃S** | | | | | | |
| **Comparative Example A4** | 60.31 | 0.03 | 19.82 | 8.71 | 10.19 | 0.94 | 0.00 | 0.00 |
| **Comparative Example H** | 62.66 | 0.01 | 16.67 | 6.98 | 10.06 | 0.10 | 3.52 | 0.00 |
| **Comparative Example I** | 38.14 | 0.03 | 34.49 | 11.06 | 11.23 | 2.70 | 0.00 | 2.35 |
| **Embodiment 4** | 0.03 | 61.54 | 18.58 | 6.36 | 8.13 | 0.19 | 3.50 | 1.67 |

**Table 12 Free calcium content, specific surface area and strength properties of clinker samples**

| **Embodiment** | **Free calcium oxide/wt%** | **Specific surface area/m²/kg** | **Compressive strength/MPa** | | |
|---|---|---|---|---|---|
| | | | **3d** | **7d** | **28d** |
| **Comparative Example A4** | 0.94 | 352.1 | 21.3 | 39.2 | 56.0 |
| **Comparative Example H** | 0.10 | 351.9 | 22.7 | 41.3 | 58.5 |
| **Comparative Example I** | 2.70 | 348.2 | 17.4 | 33.9 | 50.8 |
| **Embodiment 4** | 0.19 | 351.8 | 25.9 | 46.1 | 64.3 |

With reference to the results in Table 11 and Table 12, the alite crystal structures in the clinker samples of Comparative Examples A4, H and I were all M3-type, and the strength of each age was close. The reason why the strength of Comparative Example I was slightly lower at each age was mainly that it was a single sulfur-doped sample, and the existence of sulfur limited the formation of the alite, resulting in a low content of the alite and affecting the strength of the clinker. The alite crystal structure in the clinker of Embodiment 4 was M1-type, and the compressive strength at each age thereof was obviously higher than that of the samples of Comparative Examples A4, H and I containing M3-type alite. Compared with Comparative Example H, which had the highest strength at each age, the strength of the clinker in Embodiment 4 increased by 14.10% in 3d, 11.62% in 7d and 9.91% in 28d.

### Embodiment 5

Industrial raw materials such as limestone, malmstone, coal gangue, iron ore and desulfurized gypsum were used for raw meal preparation. Complete analysis data of the raw materials were shown in Table 13. A mineral composition of a clinker was designed to sequentially comprise 56% of C₃S, 23% of C₂S, 8% of C₃A and 13% of C₄AF, and ratio values of the clinker were designed to be that KH=0.90, SM=2.55 and IM=1.40. Embodiment 5 showed a sample containing magnesium and sulfur, and Comparative Example A5 showed a sample containing magnesium but not sulfur (the trace amount of SO₃ brought in the raw materials of Comparative Example A5 could be ignored due to industrial batching). The raw meal was blended according to a raw material proportion (as shown in Table 14) and mixed evenly, and then the mixed raw meal was calcined. In a calcining stage, the temperature was raised to 1,500°C at 10°C/min, maintained for 1 hour, and then cooled to room temperature (generally 15°C to 40°C) at a cooling rate of 60°C/min. The calcined clinker was ground into powder with a specific surface area of 340 m²/kg to 360 m²/kg, and a chemical composition of the calcined clinker was shown in Table 15.

**Table 13 Composition analysis results of industrial raw materials**

| **Item** | **LOSS** | **SiO₂** | **Al₂O₃** | **Fe₂O₃** | **CaO** | **MgO** | **K₂O** | **Na₂O** | **SO₃** | **Others** |
|---|---|---|---|---|---|---|---|---|---|---|
| **Limestone** | 41.31 | 3.89 | 1.03 | 0.45 | 49.58 | 2.25 | 0.3 | 0.07 | 0.11 | 1.01 |
| **Coal gangue** | 11.55 | 53.81 | 23.41 | 3.21 | 1.85 | 1.31 | 1.25 | 0.32 | 0.23 | 3.06 |
| **Desulfurize d gypsum** | 21.47 | 3.87 | 0.97 | 0.36 | 29.89 | 0.96 | 0.23 | 0.16 | 40.09 | 2.00 |
| **Ironstone** | 0.53 | 63.83 | 3.51 | 22.51 | 4.01 | 3.31 | 0.7 | 0.28 | 0.59 | 0.73 |
| **Malmstone** | 0.97 | 92.81 | 1.65 | 0.48 | 0.31 | 0.29 | 0.83 | 0.25 | 0.00 | 2.41 |

**Table 14 Ingredients list of industrial raw materials (wt%)**

| **Item** | **Limestone** | **Coal gangue** | **Desulfurized gypsum** | **Ironstone** | **Malmstone** |
|---|---|---|---|---|---|
| **Embodiment 5** | 79.89 | 8.46 | 3.29 | 6.94 | 1.42 |
| **Comparative Example A5** | 82.44 | 8.84 | 0.00 | 7.27 | 1.45 |

**Table 15 Chemical composition of calcined clinker**

| **Embodiment** | **Mass percentage wt/%** | | | | | | | | |
|---|---|---|---|---|---|---|---|---|---|
| | **SiO₂** | **Al₂O₃** | **Fe₂O₃** | **CaO** | **MgO** | **K₂O** | **Na₂O** | **SO₃** | **LOI** |
| **Embodiment 5** | 21.02 | 4.82 | 3.43 | 63.73 | 3.38 | 0.64 | 0.17 | 2.28 | 0.53 |
| **Comparative Example A5** | 21.85 | 4.99 | 3.57 | 64.48 | 3.38 | 0.65 | 0.17 | 0.24 | 0.66 |

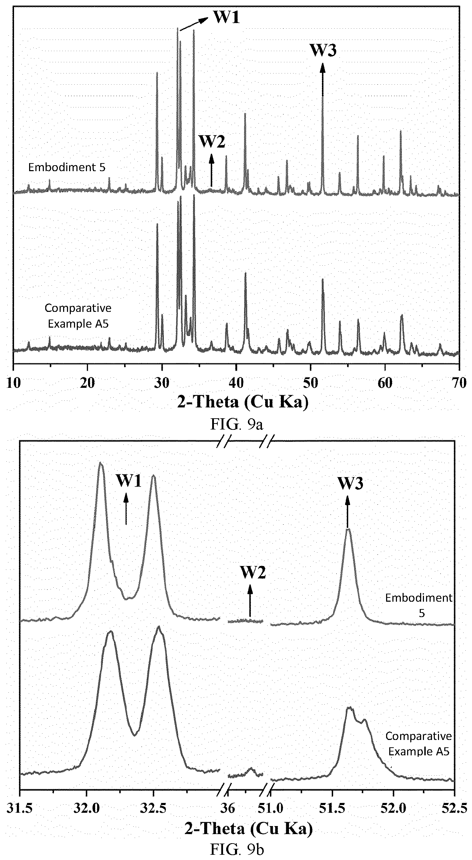

FIG. 9a showed X-ray diffraction spectra of Embodiment 5 and Comparative Example A5. It could be found from the figure by comparison that the four X-ray diffraction spectra were basically similar, indicating that compositions of four samples were similar. Fig. 9b showed three regional spectra (32.0°-33.0°, 36.5°-37.0° and 51.5°-52.5°) of characteristic diffraction peaks of alite in Embodiment 5 and Comparative Example A5 under Cu target scanning (Kα2 rays filtered). Combined with W1-W3 windows, Comparative Example A5 had obvious M3-type alite characteristics. However, the W3 window of Embodiment 5 obviously formed one single peak, indicating that the alite was completely M1-type. A height of the diffraction peak in the W2 window determined a quantity of M3-type alite. When the W2 window did not have a diffraction peak, it was indicated that the sample was M1-type alite. As could be seen from the W2 window in FIG. 5b, the diffraction peak of Comparative Example A5 was high, indicating that the alite crystal structure was M3-type, while the W2 window of Example 5 did not have a diffraction peak, and the alite crystal structure thereof was M1-type.

A mineral phase composition of the clinker obtained on the basis of Rietveld full-spectrum fitting calculation was shown in Table 16. In Comparative Example A5, the alite was completely M3-type alite, while in Embodiment 5, the alite was completely M1-type alite.

The clinker samples were tested for compressive strength according to GB/T17671-1999. Water was added to cement according to a water-cement ratio of 0.5, to prepare 40 mm ×40 mm ×160 mm mortar test blocks, the mortar test block was cured according to the standard, and the compressive strength of the mortar test block was respectively measured for 3d, 7d and 28d, which were shown in Table 17.

**Table 16 Mineral phase composition of clinker**

| **Embodiment** | **C₃S** | | **C₂S** | **C₃A** | **C₄AF** | **f-CaO** | **f-MgO** | **CaSO₄** |
|---|---|---|---|---|---|---|---|---|
| | **M3-C₃S** | **M1-C₃S** | | | | | | |
| **Comparative Example A5** | 55.36 | 0.02 | 20.59 | 8.71 | 12.73 | 0.66 | 1.93 | 0.00 |
| **Embodiment 5** | 0.03 | 55.48 | 20.21 | 8.63 | 12.86 | 0.35 | 1.86 | 0.67 |

**Table 17 Free calcium content, specific surface area and strength properties of clinker sample**

| **Embodiment** | **Free calcium oxide/wt%** | **Specific surface area/m**²**/kg** | **Compressive strength/MPa** | | |
|---|---|---|---|---|---|
| | | | **3d** | **7d** | **28d** |
| **Comparative Example A4** | 0.66 | 351.6 | 18.3 | 33.7 | 51.3 |
| **Embodiment 4** | 0.35 | 351.9 | 21.6 | 38.2 | 55.8 |

With reference to the results in Table 16 and Table 17, the mineral phase contents in Comparative Example A5 and Embodiment 5 were similar, while the alite crystal structure in Embodiment 5 was M1-type, and the compressive strength at each age of the alite was significantly higher than that in Comparative Example A5 containing the M3-type alite. In Embodiment 5, the strength of the clinker increased by 18.03% in 3d, 13.35% in 7d and 8.77% in 28d. From the strength data, it could also be well explained that the activity of the M1-type alite was better than that of the M3-type alite.

The present invention provides the ideas of the portland cement clinker and the preparation method therefor. There are many methods and ways to realize the technical solutions. The above is only the preferred embodiments of the present invention. It should be pointed out that those of ordinary skills in the art can make some improvements and embellishments without departing from the principle of the present invention, and these improvements and embellishments should also be regarded as falling with the scope of protection of the present invention. All the unspecified components in the embodiments can be realized by the prior art.

## Claims

1. A portland cement clinker, wherein M1-type alite accounts for more than 99% of a mass of all alite crystal forms; and the clinker contains a trace amount of magnesium and a trace amount of sulfur, wherein a mass percentage content of the magnesium is 0.5% to 5% in term of MgO, and a mass percentage content of the sulfur is 0.36% to 2.94% in term of SO₃.

2. The portland cement clinker according to claim 1, wherein the M1-type alite accounts for more than 99.9% of the mass of all alite crystal forms.

3. The portland cement clinker according to claim 1, wherein the mass percentage content of the magnesium is 1.5% to 3. 0% in term of MgO; and the mass percentage content of the sulfur is 1.09% to 2.18% in term of SO₃.

4. The portland cement clinker according to claim 1, comprising the following components in terms of mass percentage:
M1-type alite: 55.48% to 63.36%;
belite: 17.1% to 20.21%;
tricalcium aluminate: 6.36% to 8.63%;
tetracalcium aluminoferrite: 8.13% to 12.86%;
f-CaO: less than 0.35%; and
the balance being other phases.

5. A preparation method for the portland cement clinker according to claim 1, comprising the following steps of:
(1) determining proportions of raw meal components according to a composition of the portland cement clinker, wherein the raw meal components comprise at least one magnesium-containing raw material and at least one sulfur-containing raw material, ensuring that, in the clinker, a content of the magnesium element is calculated in term of MgO, with a mass percentage of 0.5% to 5%, and a content of the sulfur element is calculated in term of SO₃, with a mass percentage of 0.36% to 2.94%; and
(2) calcining the prepared raw meal to obtain the portland cement clinker.

6. The preparation method for the portland cement clinker according to claim 5, wherein in the step (1), the content of the magnesium element is calculated in term of MgO, the content of the sulfur element is calculated in term of SO₃, and a mass ratio of MgO to SO₃ ranges from 1.2 to 1.7.

7. The preparation method for the portland cement clinker according to claim 5, wherein the magnesium-containing raw material is any one or a combination of two or more of a magnesium-containing limestone, a magnesium-containing dolomite and MgO.

8. The preparation method for the portland cement clinker according to claim 5, wherein the magnesium-containing raw material is any one or a combination of two or more of natural gypsum, desulfurized gypsum and phospho gypsum.

9. The preparation method for the portland cement clinker according to claim 5, wherein in the step (2), in a calcining stage, the temperature is raised to 1,400°C to 1,500°C at 5°C/min to 35°C/min, maintained for 30 minutes to 60 minutes, and then cooled to room temperature at a cooling rate of 50°C/min to 90°C/min.

10. The preparation method for the portland cement clinker according to claim 9, in the step (2), in the calcining stage, the temperature is raised to 1,500°C at 10°C/min, maintained for 60 minutes, and then cooled to room temperature at the cooling rate of 60°C/min.
